# EUROPÄISCHE PATENTSCHRIFT

(11) **EP 1 946 894 B1**
(45) Veröffentlichungstag und Bekanntmachung des Hinweises auf die Patenterteilung: **26.05.2010**
(21) Anmeldenummer: 07000969.1
(22) Anmeldetag: 18.01.2007
(51) Int. Cl.: B25D 17/08, B23Q 3/12

(54) **Schnellwechsel-Werkzeugfutter für Bohrhämmer oder Schlagbohrmaschinen**
Quick change tool chuck for rotary hammers or impact drills
Mandrin à changement rapide d'outil pour marteaux perforateurs ou perceuses à percussion

(43) Veröffentlichungstag der Anmeldung: 23.07.2008
(73) Patentinhaber: Metabowerke GmbH, 72622 Nürtingen (DE)
(72) Erfinder: Pham Cong, 72793 Pfullingen (DE)
(74) Vertreter: Dreiss

(56) Entgegenhaltungen:
- EP-A- 1 052 070
- CH-A5- 655 038
- CH-A5- 668 724
- DE-A1- 4 210 911
- DE-A1- 10 005 910
- DE-A1- 19 914 577
- US-A1- 2001 008 186

## Beschreibung

Die Erfindung betrifft ein Schnellwechsel-Werkzeugfutter für Bohrhämmer oder Schlagbohrmaschinen gemäß dem Oberbegriff des Anspruchs 1. Ein derartiges Schnellwechsel-Werkzeugfutter ist aus dem Dokument DE 42 10 911 A1 bekannt.

Sogenannte schnellwechselbare Werkzeugfutter für Bohrhämmer, auch als SDS-Aufnahmefutter für Werkzeuge mit SDS-Einsteckende bezeichnet, sind vielfältig bekannt. Es wird beispielhaft auf CH 668 724 A5 und DE 199 14 577 A1 der Anmelderin hingewiesen. Bei letzterem bekannten Werkzeugfutter umfassen die erste und die zweite Verriegelungseinrichtung jeweils ein drehbares Betätigungsorgan. Es wurde aber auch schon der Vorschlag unterbreitet, bei der ersten Verriegelungseinrichtung zur Aufnahme eines Bohr- oder Schlagwerkzeugs ein axial stellbares Betätigungsorgan vorzusehen. Dieser Teil des Werkzeugfutters ist jedoch komplex.ausgebildet und baut in axialer Richtung sehr lang. Der Werkzeughalter scheint aber zudem nicht zur bestimmungsgemäß lösbaren, also auswechselbaren Anordnung an der Werkzeugspindel des Handwerkzeuggeräts ausgebildet zu sein. Auch bei EP 0 668 127 A1 und EP 1 238 760 A1 ist dies nicht möglich.
DE 42 10 911 A1 offenbart ein Werkzeugfutter bei dem die erste und die zweite Verriegelungseinrichtung axial betätigbar sind. Sie zeichnen sich aber durch einen komplexen Aufbau aus.

Der vorliegenden Erfindung liegt die Aufgabe zugrunde, ein Schnellwechsel-Werkzeugfutter der eingangs genannten Art bedienungsfreundlicher auszubilden, ohne dass der bauliche Aufwand vergrößert wird.

Diese Aufgabe wird bei einem Schnellwechsel-Werkzeugfutter der genannten Art erfindungsgemäß dadurch gelöst, dass das erste und/oder das zweite Betätigungsorgan aus Kunststoff beschaffen ist und über ein vorzugsweise metallisches Druckstück auf den Verriegelungskörper einwirkt und dass die Drehmomentübertragung zwischen der Spindel des Bohrhammers oder der Schlagbohrmaschine und dem Werkzeugfutter durch eine Sechskantkopplung erfolgt.

Druckstück und Betätigungsorgan sind dabei vorzugsweise unlösbar miteinander verbunden. Insbesondere kann das aus Kunststoff beschaffene Betätigungsorgan an das metallische Druckstück angespritzt sein.

Als besonders vorteilhaft erweist sich die Verwendung des erfindungsgemäßen Werkzeugfutters bei Werkzeugmaschinen ohne Spindelarretierung. Bei Ausführung einer axialen Stellbetätigung behindert nämlich eine fehlende Spindelarretierung nicht das Öffnen und Schließen der Verriegelungseinrichtungen.

Es erweist sich weiterhin als vorteilhaft, wenn der Futterkörper innen beispielsweise einen Innen-Sechskant aufweist, in den ein Außen-Sechskant der Spindel eingreift. Dies hat den großen Vorteil, dass die zweite Verriegelungseinrichtung und deren Verriegelungskörper nicht für eine hohe Drehmomentübertragung ausgebildet werden müssen, sondern lediglich für eine axiale Kopplung des Werkzeugfutters an der Spindel verantwortlich sind.

In Weiterbildung der Erfindung sind das erste und das zweite Betätigungsorgan in Richtung voneinander weg vorgespannt, so dass sie zum Entriegeln entgegen der Vorspannung jeweils auf das andere Betätigungsorgan zubewegbar sind. Auf diese Weise lässt sich eine sehr kurze axiale Baulänge des Werkzeugfutters realisieren, insbesondere wenn nach einer weiteren Ausführungsform das erste und das zweite Betätigungsorgan ineinander greifen können oder in eine einander übergreifende Stellung bringbar sind.

Nach einer weiteren zweckmäßigen Ausführungsform ist das erste und/oder zweite Betätigungsorgan hülsenförmig ausgebildet.

Die Vorspannung des jeweiligen Betätigungsorgans der beiden Verriegelungseinrichtungen ist zweckmäßigerweise durch eine Feder, insbesondere eine Druckfeder, realisiert. In Weiterbildung der Erfindung von besonderer Bedeutung erweist es sich als vorteilhaft, wenn zwischen dem ersten und dem zweiten Betätigungsorgan eine Feder vorgesehen ist, welche die beiden Betätigungsorgane in ihre jeweilige Verriegelungsstellung vorspannt. Als besonders vorteilhaft erweist es sich, wenn die erste und die zweite Verriegelungseinrichtung durch eine einzige Feder, insbesondere durch eine einzige Druckfeder in Verriegelungsstellung vorspannbar sind. Diese einzige Feder kann sich dann einenends gegen das erste Betätigungsorgan und anderenends gegen das zweite Betätigungsorgan mittelbar oder unmittelbar abstützen.

Nach einer weiteren vorteilhaften Ausführungsform sind das erste und das zweite Betätigungsorgan schwimmend gegeneinander gelagert. Diese schwimmende Lagerung kann in vorteilhafter Weise durch eine Feder zwischen dem ersten und dem zweiten Betätigungsorgan gebildet und hierdurch stabilisiert werden.

Im Hinblick auf eine Stabilisierung der schwimmenden Lagerung des ersten und zweiten Betätigungsorgans gegeneinander und auch im Hinblick auf eine möglichst geringe axiale Baulänge des Futterkörpers, erweist es sich als vorteilhaft, wenn das erste und das zweite Betätigungsorgan einander teleskopierend übergreifen.

Nach einer weiteren zweckmäßigen Ausführungsform bilden das erste und das zweite Betätigungsorgan gegenseitig einen axialen Anschlag zur Begrenzung der Stellbewegung.

Der Futterkörper des erfindungsgemäßen Werkzeugfutters ist vorteilhafterweise hülsenförmig ausgebildet und weist Durchtrittsöffnungen für die Verriegelungskörper der ersten und der zweiten Verriegelungseinrichtung auf. Im Hinblick auf eine kurze axiale Baulänge entsprechen die Durchtrittsöffnungen der Abmessung der Verriegelungskörper, so dass diese in axialer Richtung nicht gegenüber dem Futterkörper beweglich sind.

Des weiteren erweist es sich als vorteilhaft, wenn der Futterkörper zugleich unmittelbar eine Einstecköffnung für das Werkzeug bzw. das SDS-Einsteckende des Werkzeugs begrenzt.

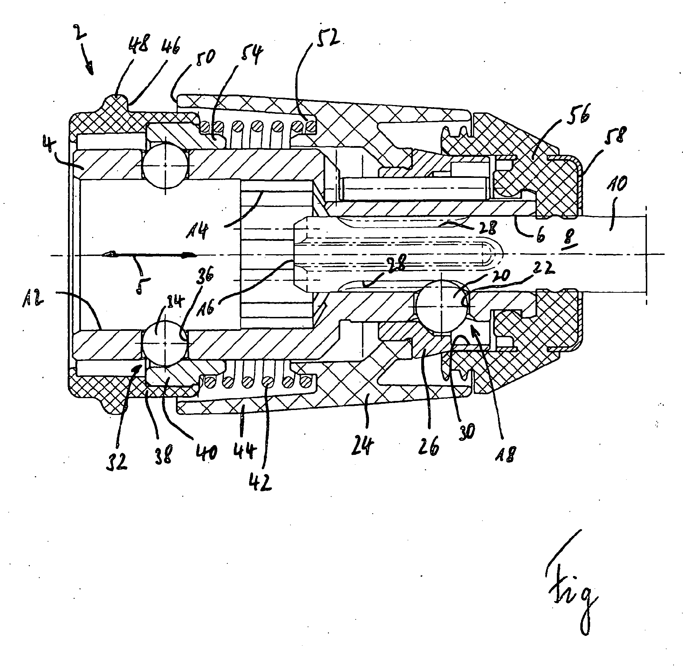

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Schnellwechsel-Werkzeugfutters. In der Zeichnung zeigt:
- die Figur: eine Längsschnittdarstellung durch ein erfindungsgemäßes Schnellwechsel-Werkzeugfutter.

Die Figur zeigt ein insgesamt mit dem Bezugszeichen 2 bezeichnetes Schnellwechsel-Werkzeugfutter für einen Bohrhammer oder eine Schlagbohrmaschine. Das Werkzeugfutter 2 umfasst einen in Längsrichtung 5 durchgehenden hülsenförmigen Futterkörper 4, der einerseits unmittelbar eine Einstecköffnung 6 für ein angedeutetes SDS-Einsteckende eines Schafts 8 eines Bohr- oder Schlagwerkzeugs 10 begrenzt und andererseits eine demgegenüber größere Öffnung 12 zum axialen Aufstecken auf ein freies Ende einer nicht dargestellten Spindel des Bohrhammers oder der Schlagbohrmaschine begrenzt.

Zur Drehmomentübertragung von der Spindel auf das Werkzeugfutter 2 ist der Futterkörper 4 mit einem Innen-Sechskant 14 ausgebildet, in den ein entsprechender Außen-Sechskant der nicht dargestellten Spindel passgenau eingreift. Die nicht dargestellte Spindel ist ebenfalls hülsenförmig ausgebildet; in ihr ist der Schläger des Schlagwerks hin- und herbewegbar aufgenommen. Der Schläger übt dann axiale Stöße auf das Ende 16 des Schafts 8 des Werkzeugs 10 aus.

Das Werkzeug 10 ist über eine erste Verriegelungseinrichtung 18 drehfest und beschränkt längsverschieblich mit dem Futterkörper 4 gekoppelt. Hierfür umfasst die erste Verriegelungseinrichtung 18 erste Verriegelungskörper 20, die in radialen Durchgangsöffnungen 22 des Futterkörpers 4 radial bewegbar sind. Die erste Verriegelungseinrichtung 18 umfasst des weiteren radial außerhalb der Verriegelungskörper 20 ein erstes hülsenförmiges Betätigungsorgan 24, welches vorzugsweise aus Kunststoff ausgebildet ist und über ein vorzugsweise metallisches Druckstück 26 die Bewegung der Verriegelungskörper 20 nach radial außen begrenzt. Durch axiales Verstellen des ersten Betätigungsorgans 24 in axialer Längsrichtung 5 in die in der Figur dargestellte Stellung wird ein jeweiliger Verriegelungskörper 20 nach radial innen verdrängt und ragt in die Einstecköffnung 6 des Futterkörpers 4 ein. Ist in die Einstecköffnung 6 ein Werkzeug 10 eingesteckt, so greifen die Verriegelungskörper 20 in langgestreckte Ausnehmungen 28 am Umfang des Schafts 8 des Werkzeugs 10 ein. Diese in axialer Längsrichtung 5 langgestreckten Ausnehmungen 28 sind der Außenform der Verriegelungskörper 20 entsprechend angepasst und bilden das SDS-Einsteckende des Werkzeugs 10. Die erste Verriegelungseinrichtung 18 befindet sich dann im verriegelten Zustand, in dem das Werkzeug 10 drehfest mit dem Futterkörper 4 gekoppelt ist und entsprechend der Länge der Ausnehmungen 28 beschränkt axial verschieblich in der Einstecköffnung 6 des Futterkörpers 4 aufgenommen ist.

Zum Entriegeln der ersten Verriegelungseinrichtung 18 wird das hülsenförmige erste Betätigungsorgan 24 entgegen einer Federvorspannung zurückgezogen. Somit gelangt eine erweiterte Abstufung 30 des Druckstücks 26 in den Bereich radial außerhalb der Verriegelungskörper 20, so dass die Verriegelungskörper 20 weiter nach radial außen verdrängt werden können und aus den langgestreckten Ausnehmungen 28 und aus der lichten Querschnittsfläche der Einstecköffnung 6 des Futterkörpers 4 freikommen. Das Werkzeug 10 kann dann aus der Einstecköffnung 6 herausgezogen werden.

Werkzeugmaschinenzugewandt ist eine zweite Verriegelungseinrichtung 32 mit zweiten Verriegelungskörpern 34 vorgesehen, die wiederum in einer radialen Durchtrittsöffnung 36 des Futterkörpers 4 radial bewegbar sind. Es ist ein zweites hülsenförmiges und vorzugsweise aus Kunststoff gebildetes Betätigungsorgan 38 mit einem damit verbundenen metallischen Druckstück 40 vorgesehen, über welche die radiale Lage der Verriegelungskörper 34 steuerbar ist. In der in der Figur dargestellten Position befindet sich die zweite Verriegelungseinrichtung 32 in Verriegelungsstellung, das heißt, die Verriegelungskörper 34 sind nach radial innen gezwungen und greifen in eine entsprechende Verriegelungsausnehmung an der nicht dargestellten Spindel der Werkzeugmaschine ein. In dieser Stellung ist das Werkzeugfutter 2 mit seinem Futterkörper 4 axial fixiert an der Spindel gehalten.

Zum Lösen des Werkzeugfutters 2 von der Spindel wird das zweite Betätigungsorgan 38 in axialer Längsrichtung 5 nach vorn, das heißt, in Richtung Werkzeug 10 axial verschoben. Auf diese Weise kommt ein durchmessererweiterter Bereich radial außerhalb der Verriegelungskörper 34 zu liegen, so dass die Verriegelungskörper 34 nach radial außen in Freigabestellung verdrängbar sind und das Werkzeugfutter 2 von der Spindel abgenommen werden kann.

Radial außerhalb und im wesentlichen konzentrisch zu dem hülsenförmigen Werkzeugfutter 2 ist eine Druckfeder 42 vorgesehen, die sich einenends axial gegen das erste Betätigungsorgan 24 und anderenends axial gegen das zweite Betätigungsorgan 38 abstützt und beide Betätigungsorgane 24, 38 in entgegengesetzte Richtungen jeweils in Verriegelungsstellung der ersten bzw. zweiten Verriegelungseinrichtung 18 bzw. 32 vorspannt. Das erste Betätigungsorgan 24 erstreckt sich mit einem verhältnismäßig dünnwandigen Umfangsabschnitt 44 radial außerhalb der Feder 42 und bildet somit eine radial äußere Ummantelung der Feder 42. Mit diesem Abschnitt 44 übergreift das erste Betätigungsorgan 24 auch das zweite Betätigungsorgan 38 radial außen. Das zweite Betätigungsorgan 38 greift dabei in diesen Abschnitt 44 teleskopierend ein. Durch Zurückziehen des ersten Betätigungsorgans 24 in Richtung auf das Werkzeuggerät und durch nach vorn Verschieben des zweiten Betätigungsorgans 38 in Richtung auf das erste Betätigungsorgan 24 werden die Betätigungsorgane 24, 38 quasi ineinander geschoben und dabei die einzige Feder 42 zusammengedrückt. Zwischen dem ersten und dem zweiten Betätigungsorgan 24 bzw. 38 sind axiale Anschlagmittel 46 vorgesehen. Im beispielhaft dargestellten Fall bildet ein äußerer Ringbund 48 am zweiten Betätigungsorgan 38 das Anschlagmittel 46, derart, dass das freie Ende 50 des Umfangsabschnitts 44 des ersten Betätigungsorgans 24 beim Zurückbewegen axial gegen dieses Anschlagmittel 46 anlegbar ist und somit die Hub- oder Stellbewegung des ersten Betätigungsorgans 24 begrenzt. Gleichermaßen wird das Anschlagmittel 46 beim axialen Verschieben des zweiten Betätigungsorgans 38 entgegen der Federkraft gegen das freie Ende 50 als Wegbegrenzung anschlagen.

Vorteilhafterweise ist die Stellkraft beider Verriegelungseinrichtungen 18, 32 durch eine einzige Feder 42 realisiert. Außerdem wird durch die beschriebene Anordnung der Feder 42 zwischen dem ersten und dem zweiten Betätigungsorgan 24, 38 auch eine schwimmende spielbehaftete Lagerung des ersten und zweiten Betätigungsorgans 24, 38 gegeneinander unterstützt und stabilisiert. Das eine Ende der Feder 42 greift hierfür in eine axiale kreisringförmige Vertiefung 52 ein und stabilisiert hierdurch das erste Betätigungsorgan 24 in seiner spielbehafteten Anordnung um den Futterkörper 4 herum, und zwar auch in radialer Richtung. Des gleichen übergreift die Feder 42 anderenends einen flanschförmigen Abschnitt 54 des ersten Betätigungsorgans 24, bzw. des dem ersten Betätigungsorgan 24 zugeordneten Druckstücks 40. Auch hierdurch wird eine schwimmende aber gleichwohl lagestabile Anordnung der Bauteile zueinander erreicht.

Das Werkzeugfutter 2 wird zur Werkstückseite hin nach vorn abgeschlossen durch ein axial auf das freie Ende des Futterkörpers 4 aufklipsbares Kunststoffteil 56, welches hierdurch axial verliersicher auf dem Futterkörper 4 fixiert ist. Das Kunststoffteil 56 ist mit einem topfförmigen Metallteil 58 versehen, wobei Kunststoffteil 56 und Metallteil 58 eine Einstecköffnung für das Werkzeug 10 begrenzen.

## Patentansprüche

1. Schnellwechsel-Werkzeugfutter (2) für Bohrhämmer oder Schlagbohrmaschinen, mit einem hülsenförmigen Futterkörper (4) und mit einer ersten Verriegelungseinrichtung (18) zur Aufnahme eines Werkzeugs (10) im Werkzeugfutter (2) und einer zweiten Verriegelungseinrichtung (32) zum Festlegen des Werkzeugfutters (2) an einer Spindel des Bohrhammers oder der Schlagbohrmaschine, wobei die erste und die zweite Verriegelungseinrichtung (18, 32) radial verschiebliche Verriegelungskörper (20, 34) umfasst, die in ihrer jeweiligen Verriegelungsstellung nach radial innen gedrückt sind und in Eingriff mit einer Ausnehmung (28) im Werkzeugschaft (8) bzw. in der Spindel sind und so das Werkzeug (10) im Werkzeugfutter (2) und das Werkzeugfutter (2) an der Spindel verliersicher halten und die in ihrer jeweiligen Entriegelungsstellung nach radial außen verdrängbar sind, um den Werkzeugschaft (8) und das Werkzeugfutter (2) freizugeben wobei sowohl ein manuell greifbares und bedienbares erstes Betätigungsorgan (24) der ersten Verriegelungseinrichtung (18) als auch ein manuell greifbares und bedienbares zweites Betätigungsorgan (38) der zweiten Verriegelungseinrichtung (32) axial stellbar ist, **dadurch gekennzeichnet, dass** das erste und/oder das zweite Betätigungsorgan (24, 38) aus Kunststoff beschaffen ist und über ein vorzugsweise metallisches Druckstück (26, 40) auf den Verriegelungskörper (20, 34) einwirkt und dass die Drehmomentübertragung zwischen der Spindel des Bohrhammers oder der Schlagbohrmaschine und dem Werkzeugfutter (2) durch eine Sechskantkopplung erfolgt.

2. Werkzeugfutter nach Anspruch 1, **dadurch gekennzeichnet, dass** das erste und das zweite Betätigungsorgan (24, 38) in Richtung voneinander weg vorgespannt sind, so dass sie zum Entriegeln jeweils auf das andere Betätigungsorgan (38, 24) zu bewegbar sind.

3. Werkzeugfutter nach Anspruch 1 oder 2, **dadurch gekennzeichnet, dass** das erste und das zweite Betätigungsorgan (24, 38) ineinander greifen können oder in eine einander übergreifende Stellung bringbar sind.

4. Werkzeugfutter nach Anspruch 1, 2 oder 3, **dadurch gekennzeichnet, dass** das erste und/oder das zweite Betätigungsorgan (24, 38) hülsenförmig ausgebildet ist.

5. Werkzeugfutter nach einem oder mehreren der vorstehenden Ansprüche, **dadurch gekennzeichnet, dass** zwischen dem ersten und dem zweiten Betätigungsorgan (18, 24) eine Feder (42), insbesondere eine Druckfeder vorgesehen ist.

6. Werkzeugfutter nach Anspruch 5, **dadurch gekennzeichnet, dass** die erste und die zweite Verriegelungseinrichtung (18, 32) durch eine einzige Feder (42) in Verriegelungsstellung vorspannbar sind.

7. Werkzeugfutter nach einem oder mehreren der vorstehenden Ansprüche, **dadurch gekennzeichnet, dass** das erste und das zweite Betätigungsorgan (24, 38) schwimmend gegeneinander gelagert sind.

8. Werkzeugfutter nach Anspruch 5, **dadurch gekennzeichnet, dass** die schwimmende Lagerung durch eine Feder (42) zwischen dem ersten und zweiten Betätigungsorgan (24, 38) gebildet und hierdurch stabilisiert ist.

9. Werkzeugfutter nach einem oder mehreren der vorstehenden Ansprüche, **dadurch gekennzeichnet, dass** das erste und das zweite Betätigungsorgan (24, 38) einander teleskopierend übergreifen.

10. Werkzeugfutter nach einem oder mehreren der vorstehenden Ansprüche, **dadurch gekennzeichnet, dass** das erste und das zweite Betätigungsorgan (24, 38) gegenseitig einen axialen Anschlag (46) zur Begrenzung der Stellbewegung bilden.

11. Werkzeugfutter nach einem oder mehreren der vorstehenden Ansprüche, **dadurch gekennzeichnet, dass** der Futterkörper (4) hülsenförmig ausgebildet ist und Durchtrittsöffnungen (22, 36) für die Verriegelungskörper (20, 34) der ersten und der zweiten Verriegelungseinrichtung (18, 32) aufweist.

12. Werkzeugfutter nach einem oder mehreren der vorstehenden Ansprüche, **dadurch gekennzeichnet, dass** der Futterkörper (4) unmittelbar eine Einstecköffnung (6) für das Werkzeug (10) begrenzt.

## Claims

1. A quick-change tool chuck (2) for rotary hammers or impact drills, having a sleeve-shaped chuck body (4) and a first locking device (18) for receiving a tool (10) in the tool chuck (2), and a second locking device (32) for fixing the tool chuck (2) on a spindle of the rotary hammer or of the impact drill, wherein the first and the second locking devices (18, 32) contain radially displaceable locking bodies (20, 34) which, in their respective locking positions, are pressed radially inward and are in engagement with a recess (28) in the tool shaft (8), or respectively in the spindle, and in this way maintain the tool (10) in the tool chuck (2) and the tool chuck (2) on the spindle in a manner secure against loss and, in their respective unlocking position, can be displaced radially outward in order to release the tool shaft (8) and the tool chuck (2), wherein both a manually grippable and actuable first operating member (24) of the first locking device (18), as well as a manually grippable and actuable second operating member (38) of the second locking device (32) can be axially fixed in place, **characterized in that** the first and/or the second operating member (24, 38) are made of a plastic material and act on the locking body (20, 34) via a preferably metallic pressure element (26, 40), and that the torque transfer between the spindle of the rotary hammer or of the impact drill and the tool chuck (2) takes place by means of a hexagon coupling.

2. The tool chuck in accordance with claim 1, **characterized in that** the first and the second operating members (24, 38) are prestressed in a direction away from each other so that, for unlocking, they can be respectively moved in the direction toward the other operating member (38, 24).

3. The tool chuck in accordance with claim 1 or 2, **characterized in that** the first and the second operating members (24, 38) can engage each other, or can be brought into a position in which they extend over each other.

4. The tool chuck in accordance with claim 1, 2 or 3, **characterized in that** the first and/or the second operating members (24, 38) are embodied in a sleeve-like manner.

5. The tool chuck in accordance with one or several of the preceding claims, **characterized in that** a spring (42), in particular a pressure spring, is provided between the first and the second operating members (24, 38).

6. The tool chuck in accordance with claim 5, **characterized in that** the first and the second locking devices (18, 23) can be prestressed in the locking position by means of a single spring (42).

7. The tool chuck in accordance with claim one or several of the preceding claims, **characterized in that** the first and the second operating members (24, 38) are floatingly seated in respect to each other.

8. The tool chuck in accordance with claim 5, **characterized in that** the floating seating is provided by a spring (42) between the first and the second operating members (24, 38) and is stabilized in this way.

9. The tool chuck in accordance with one or several of the preceding claims, **characterized in that** the first and the second operating members (24, 38) extend over each other in a telescoping manner.

10. The tool chuck in accordance with one or several of the preceding claims, **characterized in that** together the first and the second operating members (24, 38) form axial stops (46) for limiting the actuation movement.

11. The tool chuck in accordance with one or several of the preceding claims, **characterized in that** the chuck body (4) is designed in the manner of a sleeve and has penetration openings (22, 36) for the locking bodies (20, 34) of the first and of the second locking devices (18, 32).

12. The tool chuck in accordance with one or several of the preceding claims, **characterized in that** the chuck body (4) directly delimits an insertion opening (6) for the tool (10).

## Revendications

1. Mandrin de serrage à changement rapide d'outil (2) pour marteaux perforateurs ou perceuses à percussion, comportant un corps (4) en forme de douille et un premier dispositif de verrouillage (18) pour loger un outil (10) dans le mandrin de serrage (2), et un deuxième dispositif de verrouillage (32) pour immobiliser le mandrin de serrage (2) sur une broche du marteau perforateur ou de la perceuse à percussion, le premier et le deuxième dispositif de verrouillage (18, 32) comportant des corps de verrouillage (20, 34) mobiles en translation dans la direction radiale, qui, dans leur position de verrouillage respective, sont poussés radialement vers l'intérieur et sont en prise avec un évidement (28) dans la tige (8) de l'outil ou dans la broche et maintiennent ainsi de manière imperdable l'outil (10) dans le mandrin de serrage (2) et le mandrin de serrage (2) sur la broche, et qui, dans leur position de déverrouillage respective, peuvent être poussés radialement vers l'extérieur pour libérer la tige (8) de l'outil et le mandrin de serrage (2), sachant qu'un premier organe de manoeuvre (24), apte à être saisi et manoeuvré manuellement, du premier dispositif de verrouillage (18), de même qu'un deuxième organe de manoeuvre (38), apte à être saisi et manoeuvré manuellement, du deuxième dispositif de verrouillage (32) sont réglables axialement, **caractérisé en ce que** le premier et/ou le deuxième organe de manoeuvre (24, 38) sont réalisés en matière plastique et agissent sur le corps de verrouillage (20, 34) par l'intermédiaire d'un élément de pression (26, 40) métallique de préférence, et **en ce que** la transmission du couple de rotation entre la broche du marteau perforateur ou de la perceuse à percussion et le mandrin de serrage (2) est assurée par un couplage à six pans.

2. Mandrin de serrage selon la revendication 1, **caractérisé en ce que** le premier et le deuxième organe de manoeuvre (24, 38) sont précontraints dans une direction écartant l'un de l'autre, de telle sorte que pour le déverrouillage, ils doivent être déplacés chacun vers l'autre organe de manoeuvre (24, 38).

3. Mandrin de serrage selon la revendication 1 ou 2, **caractérisé en ce que** le premier et le deuxième organe de manoeuvre (24, 38) peuvent s'engager l'un dans l'autre ou peuvent être amenés dans une position dans laquelle ils se chevauchent l'un l'autre.

4. Mandrin de serrage selon la revendication 1, 2 ou 3, **caractérisé en ce que** le premier et/ou le deuxième organe de manoeuvre (24, 38) sont réalisés en forme de douille.

5. Mandrin de serrage selon une ou plusieurs des revendications précédentes, **caractérisé en ce qu'**entre le premier et le deuxième organe de manoeuvre (18, 24) est prévu un ressort (42), en particulier un ressort de pression.

6. Mandrin de serrage selon la revendication 5, **caractérisé en ce que** le premier et le deuxième dispositif de verrouillage (18, 32) peuvent être précontraints dans la position de verrouillage par un seul ressort (42).

7. Mandrin de serrage selon une ou plusieurs des revendications précédentes, **caractérisé en ce que** le premier et le deuxième organe de manoeuvre (24, 38) sont montés flottants l'un par rapport à l'autre.

8. Mandrin de serrage selon la revendication 5, **caractérisé en ce que** le montage flottant est formé par un ressort (42) entre le premier et le deuxième organe de manoeuvre (24, 38) et est stabilisé de ce fait.

9. Mandrin de serrage selon une ou plusieurs des revendications précédentes, **caractérisé en ce que** le premier et le deuxième organe de manoeuvre (24, 38) s'engagent de manière télescopique l'un dans l'autre.

10. Mandrin de serrage selon une ou plusieurs des revendications précédentes, **caractérisé en ce que** le premier et le deuxième organe de manoeuvre (24, 38) forment réciproquement une butée (46) axiale pour limiter le mouvement de réglage.

11. Mandrin de serrage selon une ou plusieurs des revendications précédentes, **caractérisé en ce que** le corps (4) du mandrin de serrage est réalisé en forme de douille et comporte des trous débouchants (22, 36) pour les corps de verrouillage (20, 34) du premier et du deuxième dispositif de verrouillage (18, 32).

12. Mandrin de serrage selon une ou plusieurs des revendications précédentes, **caractérisé en ce que** le corps (4) du mandrin de serrage délimite directement un orifice d'enfichage (6) pour l'outil (10).
